# EUROPEAN PATENT SPECIFICATION

(11) **EP 2 992 763 B1**
(45) Date of publication and mention of the grant of the patent: **11.10.2017**
(21) Application number: 14791163.0
(22) Date of filing: 30.04.2014
(51) Int. Cl.: A23L 7/10, A23L 33/21, A23L 33/00, A23L 33/10

(54) **A METHOD OF PREPARING COOKED RICE CONTAINING INDIGESTIBLE MALTODEXTRIN FOR INHIBITING BLOOD SUGAR ELEVATION**
VERFAHREN ZUR HERSTELLUNG VON GEKOCHTEM REIS, DER UNVERDAULICHES MALTODEXTRIN ZUR VERHINDERUNG DER ERHÖHUNG VOM BLUTZUCKERSPIEGEL ENTHÄLT
PROCÉDÉ DE PRÉPARATION D'UN RIZ CUISINÉ CONTENANT UNE MALTODEXTRINE INDIGESTE POUR INHIBER L'ÉLÉVATION DE SUCRE SANGUINE

(30) Priority: 30.04.2013 KR 20130048320
(43) Date of publication of application: 09.03.2016
(73) Proprietor: CJ Cheiljedang Corporation, Seoul 100-400 (KR)
(72) Inventor: JUNG, Woo Young, Seoul 137-040 (KR); JEONG, Hyo Young, Seoul 121-876 (KR); KWON, Soon Hee, Seongnam-si Gyeonggi-do 463-890 (KR); KIM, Hye Jin, Suwon-si Gyeonggi-do 443-270 (KR)
(74) Representative: Maikowski & Ninnemann Patentanwälte Partnerschaft mbB
(86) International application number: PCT/KR2014/003846
(87) International publication number: WO 2014/178644

(56) References cited:
- WO-A2-2010/047548
- JP-A- 2001 057 854
- KR-A- 20080 010 581
- KR-A- 20090 056 530
- KR-A- 20130 029 754
- KR-B1- 100 558 377
- US-A1- 2011 274 815
- DATABASE FSTA [Online] INTERNATIONAL FOOD INFORMATION SERVICE (IFIS), FRANkFURT-MAIN, DE; SALOVAARA H ET AL: XP002761267, Database accession no. FS-2008-07-Aj2524
- DATABASE WPI Week 201363 Thomson Scientific, London, GB; AN 2013-P23576 XP002761268, & CN 103 005 275 A (FENGTAI COUNTY KANG ZHI FOOD CO LTD) 3 April 2013 (2013-04-03)
- DATABASE WPI Week 199318 Thomson Scientific, London, GB; AN 1993-148473 XP002761269, & JP H05 84045 A (TERUMO CORP) 6 April 1993 (1993-04-06)

## Description

### Technical Field

The present invention relates to a method of preparing cooked rice containing indigestible maltodextrin for inhibiting blood sugar elevation, and more particularly to a method of preparing cooked rice, which functions to inhibit blood glucose elevation while maintaining its sensory characteristics such as color values without having to use a separate additive such as a pH-adjusting agent, by controlling the content of indigestible maltodextrin to a specific level.

### Background Art

The rate of incidence of diabetes is increasing worldwide due to changes in eating habits caused by economic development, and an aging population. According to the results of a survey conducted by the Korean National Health Insurance, the number of diabetic patients in Korea has gradually increased from 1.6 million in the year 2006 to 1.8 million in the year 2008 and 2.0 million in the year 2011.

Diabetes is one of the most common chronic diseases, and the prevalence thereof is increasing worldwide. According to the results of the Korean National Health and Nutrition Examination Survey conducted by the Korean Ministry of Health and Welfare, the prevalence of diabetes among Koreans aged 30 years or older increased from 9.7% in the year 2008 to 9.8% in the year 2011. Particularly, impaired fasting glucose (fasting glucose level: 100 mg/dl to 125 mg/dl) or impaired glucose tolerance (glucose level at 2 hours after oral glucose tolerance test: 140 mg/dl to 199 mg/dl) is not diabetes, but is regarded as a pre-diabetes state that can progress to diabetes. Thus, it is important to control pre-diabetes in a suitable manner, because pre-diabetes is highly likely to develop into diabetes and can cause cardiovascular diseases associated with diabetes.

In the "National Diabetes Control Strategy" for prevention of diabetes, eating habits and impaired glucose tolerance are pointed out as risk factors of diabetes, and improvement in eating habits and exercise therapy are recommended for prevention of diabetes. Further, it is known that excessive postprandial blood glucose levels cause insulin hypersecretion and a decrease in insulin sensitivity to increase the prevalence of diabetes. Thus, it is particularly important to control postprandial blood glucose levels.

Indigestible maltodextrin has been proven to function to inhibit postprandial blood glucose elevation, promote bowel evacuation and reduce blood triglyceride levels. Also, indigestible maltodextrin functions to reduce insulin hypersecretion by delaying the absorption of glucose into blood vessels. Further, the intake of indigestible maltodextrin inhibits the diffusion of nutrients such as glucose and reduces the rates of digestion and absorption of food to the lower portion of the small intestines, thereby delaying the absorption of glucose to inhibit an excessive increase in blood glucose levels.

This indigestible maltodextrin is a health functional substance obtained by enzymatically degrading a roasted dextrin, which is obtained by the heating of corn starch, with alpha-amylase and amyloglucosidase, purifying the degradation product and fractionating an indigestible component from the purification product. It has a dietary fiber content of 80% or more and is a functional material registered in the Health Function Food Code.

Indigestible maltodextrin is a non-viscous, water-soluble dietary fiber and is known to function to inhibit postprandial blood glucose elevation by delaying glucose absorption *in vivo.* Also, the results of various human experiments demonstrated that indigestible maltodextrin has the effects of inhibiting blood glucose elevation, inhibiting an increase in triglyceride levels and increasing bowel movements. In addition, it was reported that intake of a dietary fiber having a high content of indigestible maltodextrin shows the effects of increasing the feeling of fullness, reducing hunger, reducing body weight, lowering blood glucose elevation, reducing insulin resistance. Thus, indigestible maltodextrin is a functional food material that can be used for prevention of diabetes and in dietary therapy.

Meanwhile, Japanese Patent Laid-Open Publication No. 2001-057854 entitled "Polished rice, cooked rice food incorporated with dietary fiber and production of the cooked rice food" discloses that the dietary fiber functions to improve bowel movements and the food taste and lowers blood glucose levels and cholesterol levels. In addition, Japanese Patent Laid-Open Publication No. 2007-0065380 discloses an agent that inhibits postprandial blood triglyceride elevation when being administered together with a high-fat diet, and a food that inhibits postprandial blood triglyceride elevation when being administered together with the high-fat diet.

As described above, there have been many studies on the effects of indigestible maltodextrin on the control of postprandial blood glucose levels. However, there have been little or no reports of human experiments on the effects of indigestible maltodextrin-containing boiled rice on the control of blood glucose levels.

Dietary fibre components and functions (Hannu Salovaara, Fred Gates and Maija Tenkanen, 2007) discloses resistant maltodextrin. CN 103005275 A discloses a quick-frozen black sesame rice ball and a preparation method thereof. US 2011/274815 A1 discloses a method for preparing aseptic packaged instant wet scorched rice. JP 1993-084045 A discloses dried rice which exhibits anti-obesity activity. KR 10-0558377 B discloses packaged cooked rice containing rice, glutinous rice, resistant maltodextrin and water soluble vitamins, and preparation method thereof. KR 10-2013-0029754 A discloses a sweetener material composition containing slow digestive materials for improving diabetes. However, the prior art does not disclose a method for preparing retort-packaged cooked rice with the features according to the invention.

### Disclosure

### Technical Problem

Under such circumstances, the present inventors have prepared functional cooked rice using only the functional material indigestible maltodextrin and purified water and objectively verified the effects of intake of the cooked rice on the control of blood glucose levels through human experiments. As a result, the present inventors have found that a test group fed with the indigestible maltodextrin-containing cooked rice for 4 weeks showed significant decreases in blood glucose levels and blood glucose response areas at 30 min, 60 min and 120 min after a meal and showed significant differences in blood glucose levels and blood glucose response areas at 60 min and 120 min from other groups, thereby completing the present invention.

It is an object of the present invention to provide a method for preparing cooked rice which functions to inhibit blood glucose elevation while maintaining its sensory characteristics such as color values without having to use a separate additive such as a pH adjusting agent.

### [Technical Solution]

To achieve the above object, the present invention provides a method for preparing cooked rice for inhibiting blood glucose elevation, the method comprising the steps of:
1) washing raw rice, soaking the washed rice in water, dehydrating the soaked rice, and filling the dehydrated rice into a container;
2) heat-sterilizing the rice filled into the container;
3) supplying cooking water, which contains indigestible maltodextrin in an amount of 5.0-8.0 g based on 210 g of the cooked rice, into the rice-filled container, and cooking the rice with steam; and
4) sealing the cooked rice; and
5) subjecting the cooked rice to a retort process, wherein the retort process in step 5) is performed by sterilizing the cooked rice at a temperature of 100 to 110°C for 3-5 minutes, and then sterilizing the cooked rice at a temperature of 120 to 130°C for 5-15 minutes. It is disclosed that sealing in step 4) may be performed under aseptic conditions when the cooked rice is prepared in the form of aseptic-packaged cooked rice. It is also disclosed that when the cooked rice is prepared in the form of aseptic-packaged cooked rice, the method may further comprise, after step 4), step 5-1) of steaming and cooling the cooked rice.

Hereinafter, the present invention will be described in detail.

The preparation method according to the present invention is technically characterized in that cooked rice, which functions to inhibit blood glucose elevation while having sensory characteristics similar to those of conventional cooked rice using no indigestible maltodextrin, can be prepared using only the functional material indigestible maltodextrin and purified water. Particularly, according to the present invention, it is possible to prepare cooked rice, which functions to inhibit blood glucose elevation while maintaining its sensory characteristics such as color values without having to use a separate additive such as a pH adjusting agent, by controlling the content of indigestible maltodextrin to a specific level.

As used herein, the term "cooked rice" means a health functional cooked rice product that corresponds to ready-to-cook food defined in the Korean Food Code, can be eaten by a consumer after performing a simple heating/cooking process by microwave oven cooking (700 W, 2 min) without a separate cooking process, and contains, in addition to purified water, the health functional material indigestible maltodextrin effective in inhibiting postprandial blood glucose elevation as describe in the Health Functional Food Code.

As used herein, the term "inhibiting blood glucose elevation" means delaying postprandial glucose absorption to inhibit an increase in postprandial blood glucose levels, which can occur after eating. Thus, intake of the cooked rice prepared by the preparation method of the present invention assists in the prevention and treatment of diabetes by inhibiting postprandial blood glucose elevation.

Step 1) of the preparation method according to the present invention is a step of washing raw rice, soaking the washed rice in water, dehydrating the soaked rice, and filling the dehydrated rice into a container. In this step, raw rice is pretreated and then filled into a container.

In the present invention, the raw rice may be non-glutinous rice, glutinous rice, white rice, brown rice, black rice, germinated brown rice, glutinous barley, other minor grains, or a mixture of two or more thereof. In the present invention, the raw rice is preferably non-glutinous rice in terms of the effect of inhibiting blood glucose elevation.

In the present invention, the soaking time of the raw rice in step 1) is preferably 60-90 minutes. If the soaking time of the raw rice is not within the above-specified range, the cooked rice will become soft or slightly hard, have poor adhesion, form cake, or will be very wet and soft.

Step 2) of the preparation method is a step of heat-sterilizing the rice filled into the container. In this step, the pretreated raw rice is sterilized before steaming.

In step 2), the raw rice is treated at a high temperature for a short time, and thus can be pre-gelatinized (pre-steamed) during sterilization. Step 2) is a process of pre-sterilizing and pre-gelatinizing the pretreated rice using a rice cooker or an autoclave sterilizer which are the existing facilities before cooking. In the present invention, the soaked rice is pre-gelatinized in step 2) before cooking, and thus the surface of the rice is hardened so that deterioration in quality such as the softening of the rice at high temperature and pressure during cooking can be inhibited.

In the present invention, heat-sterilizing in step 2) may preferably be performed 4-10 times at a temperature of 130∼150 °C for 5-8 seconds each time. If the heat-sterilization conditions out of the above-specified ranges, the cooked rice will become soft or slightly hard, have poor adhesion, form cake, or will be very wet and soft.

Step 3) of the preparation method is a step of supplying cooking water, which contains indigestible maltodextrin in an amount of 5.0-8.0 g based on 210 g of the cooked rice, into the rice-filled container, and cooking the rice with steam. In this step, cooking water containing indigestible maltodextrin is filled into the container, and the rice is cooked.

As used herein, the term "indigestible maltodextrin" means a material suitable for edible purposes as a health functional substance, obtained by enzymatically degrading a roasted dextrin, which is obtained by heating of corn starch, with α-amylase and amyloglucosidase, purifying the degradation product and fractionating an indigestible component from the purification product. If indigestible maltodextrin is not liquid, it has a dietary fiber content of 80% or more.

Indigestible maltodextrin functions to inhibit postprandial blood glucose elevation, promote bowel movements and reduce triglyceride levels, but when it is added in an excessive amount, it can negatively affect the quality of cooked rice, such as its color value. Thus, according to the present invention, cooked rice is prepared using cooking water containing indigestible maltodextrin in an amount of 5.0-8.0 g based on 210 g of the cooked rice. In other words, the content of indigestible maltodextrin in cooking water that is supplied into the raw rice-filled container in step 3) is 5.0-8.0 g based on 210 g of the resulting cooked rice product.

Indigestible maltodextrin that is used in the present invention may be a commercially available product or may be prepared.

In the present invention, the dietary fiber content of indigestible maltodextrin may preferably be 4.0-6.5 g based on 210 g of the cooked rice.

Step 4) of the preparation method is a step of sealing the cooked rice. In this step, the container containing the cooked rice is sealed.

In the present invention, when the cooked rice is to be prepared in the form of aseptic-packaged cooked rice, step 4) may be performed under aseptic conditions.

Specifically, when the cooked rice is to be prepared in the form of aseptic-packaged cooked rice, step 4) may be performed in a clean room (clean class: 100 or below; standard of clean room provided by the U.S. National Aeronautical and Space Administration; the number of particles having a size of 0.5 *µ*m or larger in 1 ft³: 100).

Preferably, when the cooked rice is to be prepared in the form of aseptic-packaged cooked rice, the preparation method may further comprise, after step 4), step 5-1) of steaming and cooling the cooked rice. It is disclosed that step 5-1) may be performed by steaming the cooked rice for 10-15 minutes and cooling the cooked rice in water at 5∼15 °C, preferably 10 °C, for 10-20 minutes, preferably 15 minutes. It is disclosed that step 5-2) may be performed by a rotational retort process.

Generally, the preparation of retort-packaged cooked rice is performed under strong sterilization conditions, including high temperature and pressure conditions, compared to the preparation of aseptic-packaged rice. For this reason, it is important to determine the optimum temperature and pressure conditions in which the taste quality of retort-packaged cooked rice is maintained at the same level as that of aseptic-packaged cooked rice. In the present invention, retort-packaged cooked rice having the same taste quality of aseptic-packaged cooked rice can be prepared by performing the retort process in step 5-2 using a two-stage sterilization process which includes a first sterilization state at a temperature of 100∼110°C for 3-5 minutes and a second sterilization state at a temperature of 120∼130 °C for 5-15 minutes.

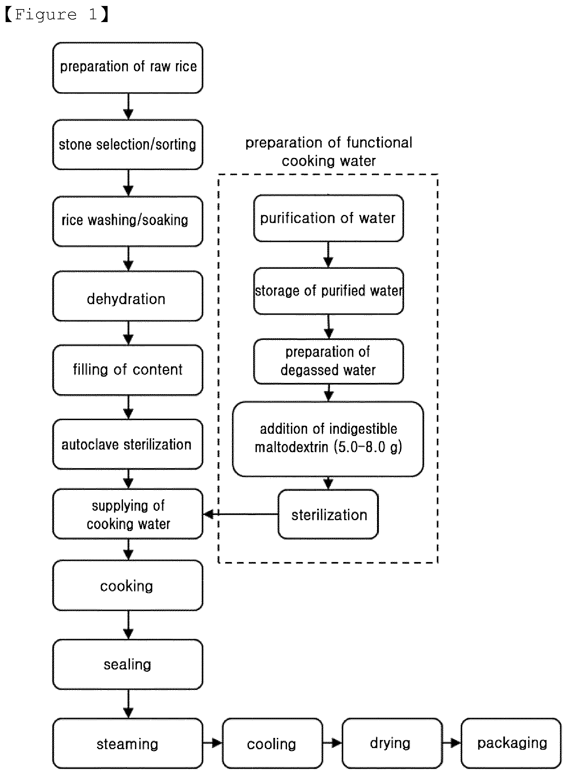

FIG. 1 shows a process for preparing cooked rice for inhibiting blood glucose elevation using an aseptic packaging process according to one embodiment of the present invention.

Specifically, in the present invention, cooked rice is prepared by washing non-glutinous rice, soaking the washed rice in water for 60-90 minutes, dehydrating the soaked rice, filling the dehydrated rice into a heat-resistant plastic container, heat-sterilizing the filled rice 4-10 times in a closed space at a temperature of 130∼150 °C for 5-8 seconds each time, supplying a specific amount of cooking water, which contains indigestible maltodextrin in an amount of 5.0-8.0 g based on 210 g of the cooked rice, into the container, cooking the rice with steam at 100 °C for about 30 minutes, sealing the cooked rice in an aseptic space, and steaming, cooling, drying and packaging the cooked rice.

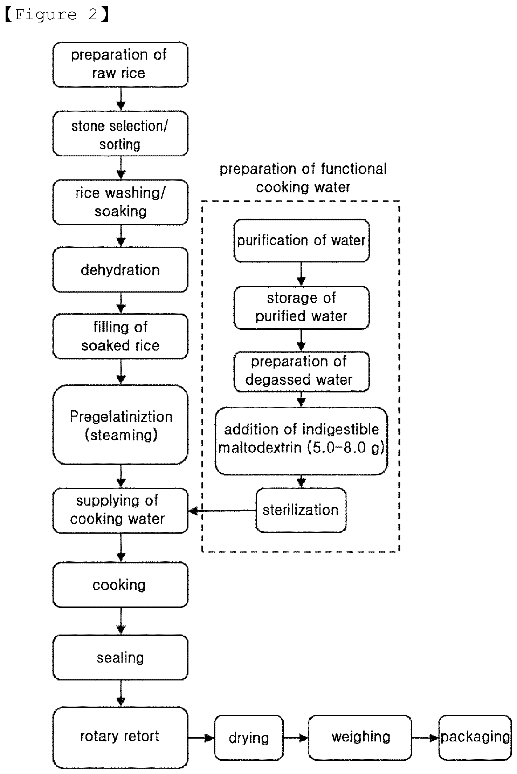

FIG. 2 shows a process for preparing cooked rice for inhibiting blood glucose elevation using a retort packaging process according to another embodiment of the present invention.

Specifically, in the present invention, cooked rice is prepared by washing non-glutinous rice, soaking the washed rice in water for 60-90 minutes, dehydrating the soaked rice, filling the dehydrated rice into a heat-resistant plastic container, heat-sterilizing the filled rice 4-10 times in a closed space at a temperature of 130∼150 °C for 5-8 seconds each time, supplying a specific amount of cooking water, which contains indigestible maltodextrin in an amount of 5.0-8.0 g based on 210 g of the cooked rice, into the container, cooking the rice with steam at 100 °C for about 30 minutes, sealing the cooked rice, subjecting the sealed rice to a rotational retort process including first sterilization at a temperature of 100∼110 °C for 3-5 minutes and second sterilization at a temperature of 120∼130 °C for 5-15 minutes, and drying, weighing and packaging the sterilized cooked rice.

In the present invention, the water-soluble dietary fiber content of the resulting cooked rice is preferably 2.0-3.1 wt%. In other words, the water-soluble dietary fiber content of the prepared cooked rice is preferably 2.0-3.1 wt% based on the total weight of the cooked rice.

In an example of the present invention, cooked rice containing indigestible maltodextrin functioning to inhibit postprandial blood glucose elevation was prepared, and then the sensory evaluation of the cooked rice was performed and the effect of intake of the cooked rice was verified by a human experiment. Thus, it was shown that the present invention can provide a method for preparing cooked rice which functions to inhibit postprandial blood glucose elevation while having the same taste as that of conventional cooked rice.

According to the Health Functional Food Code, in order for indigestible maltodextrin to exhibit the effect of inhibiting postprandial blood glucose elevation, the daily intake of indigestible maltodextrin should be 11.9-30 g. Thus, according to the daily intake standard, the optimum content of indigestible maltodextrin that maintains the quality of the cooked rice of the present invention at the same level of conventional cooked rice was determined.

Specifically, in an example of the present invention, the color values of cooked rice containing indigestible maltodextrin in an amount of 5.0-8.0 g based on 210 g of the cooked rice and the color value of conventional cooked rice were measured, and as a result, it was found that there was no difference in the color value between the two cooked rice products.

In another example of the present invention, the effects of rice soaking time, heat sterilization conditions and water content on the taste quality of the cooked rice having the above-specified content of indigestible maltodextrin were examined. Specifically, rice was soaked in water for 60-90 minutes, heat-sterilized 4-10 times for 5-8 seconds each time and designed to have a final water content of 60-65%, and as a result, it was shown that the taste quality of the cooked rice had no significant difference from that of conventional cooked rice. The inventive cooked rice for inhibiting postprandial blood glucose elevation was designed to contain indigestible maltodextrin dietary fiber in an amount of 4.0-6.5 g based on 210 g of the cooked rice, corresponding to an indigestible maltodextrin content of 12-19.5 g as the daily intake defined in the Health Functional Food Code, so that indigestible maltodextrin contained in the cooked rice exhibits the effect of inhibiting postprandial blood glucose elevation.

It was proven that the functional material indigestible maltodextrin is stable under various conditions, including acid and heat. Thus, whether the dietary fiber content of the cooked rice containing indigestible maltodextrin was maintained at the designed content was examined, and as a result, it was found that the water-soluble dietary fiber content of the cooked rice was 2.0-3.1 wt%. Thus, according to the Food Code definition indicating that the dietary fiber content of final products should be 80% or higher of the indicated amount, it is concluded that the designed indigestible maltodextrin content is suitable.

In another example of the present invention, a human experiment was performed in order to examine whether the cooked rice has the effect of inhibiting postprandial blood glucose elevation. Specifically, indigestible maltodextrin-containing cooked rice and conventional cooked rice were randomly provided to 53 persons with impaired fasting glucose, impaired glucose tolerance and early-stage diabetes, and the persons were allowed to take the rice products once a day for 4 week. As a result, the test group fed with the indigestible maltodextrin-containing cooked rice for 4 weeks showed significant decreases in blood glucose levels and blood glucose response areas at 30 min, 60 min and 120 min, whereas the control group fed with the conventional cooked rice showed no significant difference at 0 min, 30 min, 60 min and 120 min. In addition, there was a significant difference in glucose levels and blood glucose response areas at 60 min and 120 min between the groups.

In another example of the present invention, whether the retort process conditions according to the present invention influence the taste quality of the cooked rice was examined. Specifically, the taste quality of retort-packaged cooked rice subjected to a retort process consisting of a two-stage sterilization process including first sterilization at a temperature of 100∼110 °C for 3-5 minutes and second sterilization at a temperature of 120∼130 °C for 5-15 minutes was compared to that of aseptic-packaged cooked rice, and as a result, it was found that the overall taste of the retort-packaged cooked rice was equal to that of the aseptic-packaged cooked rice.

### Advantageous Effects

The present invention provides a method for preparing cooked rice which functions to inhibit blood glucose elevation while maintaining its sensory characteristics such as color values without having to use a separate additive such as a pH adjusting agent by controlling the content of indigestible maltodextrin to a specific level. In other words, the present invention provides cooked rice which has the effect of inhibiting postprandial blood glucose elevation while having the same taste quality as that of white cooked rice. The cooked rice according to the present invention makes it possible to control eating habits by daily meals without taking separate health functional food, thereby reducing the possibility of development of adult diseases such as diabetes.

### Description of Drawings

FIG. 1 is a flow chart showing a process for preparing indigestible maltodextrin-containing cooked rice for inhibiting blood glucose elevation using an aseptic packaging process according to the present invention.
FIG. 2 is a flow chart showing a process for preparing indigestible maltodextrin-containing cooked rice for inhibiting blood glucose elevation using a retort packaging process according to the present invention.
FIG. 3 is a graphic diagram showing the change in color value of cooked rice as a function of the content of indigestible maltodextrin.
FIG. 4 is a graphic diagram showing the differences in blood glucose levels and blood glucose response areas (AUC) between groups fed with indigestible maltodextrin-containing cooked rice and conventional cooked rice.
FIG. 5 shows the results of observing the cross-sectional shape of a grain of retort-packaged cooked rice prepared according to the present invention.
FIG. 6 shows the results of observing the cross-sectional shape of a grain of aseptic-packaged cooked rice prepared according to the present invention.

### Mode for Invention

Hereinafter, the present invention will be described in further detail with reference to examples. It is to be understood, however, that these examples are for illustrative purposes only and are not intended to limit the scope of the present invention.

### Example 1: Determination of optimum content of indigestible maltodextrin (said example is not part of the invention)

Non-glutinous rice was washed, soaked in water and dehydrated, and then a specific amount of the rice was filled into a heat-resistant container and sterilized 8 times in a closed space at a temperature of 140 °C for 5-8 seconds. Next, a specific amount of cooking water containing indigestible maltodextrin in an amount of 5-8 g based on 210 g of cooked rice was supplied into the container, and the rice was cooked with steam in a rice cooker at 100 °C for about 30 minutes. The cooked rice was sealed in an aseptic space, packaged and cooled, thereby preparing cooked rice containing indigestible maltodextrin in an amount of 5-8 g based on 210 g of the cooked rice. Cooked rice was prepared using cooking waters having various indigestible maltodextrin contents, and the color values thereof were measured and compared.

The appearance qualities of the cooked rice products having various indigestible maltodextrin contents were analyzed based on the color values thereof, and as a result, it was found that the cooked rice having an indigestible maltodextrin content of 8.0 g or more showed a significant difference in color from conventional cooked rice, and this indigestible maltodextrin content influenced the appearance quality of the cooked rice to reduce the overall quality of the cooked rice. Thus, in order to maintain the same taste quality as that of conventional cooked rice, the optimum content of indigestible maltodextrin was determined to be 5.0-8.0 g based on 210 g of cooked rice.

### Example 2: Measurement of color value as a function of indigestible maltodextrin content (said example is not part of the invention)

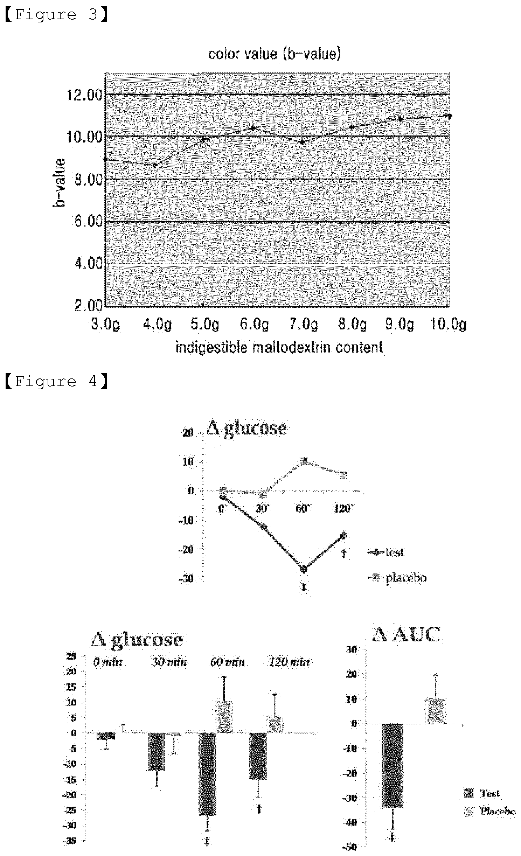

The color values of cooked rice prepared by adding indigestible maltodextrin in an amount of 3.0-10.0 g based on 210 g of the cooked rice were measured. The results of the measurement are shown in FIG. 3.

As can be seen in FIG. 3, the b-value that indicates the yellowness of color had no statistically significant difference between indigestible maltodextrin contents 5.0 g, 6.0 g, 7.0 g and 8.0 g.

### Example 3: Preliminary experiment on optimum conditions for preparation of indigestible maltodextrin-containing functional cooked rice (said example is not part of the invention)

In order to maintain the taste quality of cooked rice prepared using cooking water containing indigestible maltodextrin in the amount described in Example 1 at the same level as the taste quality of conventional cooked rice, a preliminary experiment on rice soaking time, heat sterilization conditions and water content, which influence the taste quality of cooked rice, was performed.

As a result, it was found that cooked rice prepared under the following conditions showed sensory characteristics which are not different from those of conventional cooked rice: rice soaking time: 60-90 minutes; heat sterilization: 4-10 times for 5-8 seconds each time; and water content of cooked rice: 60-65 wt%. Cooked rice prepared under conditions not within the above-specified ranges was soft or slightly hard, had poor adhesiveness, formed cake, or was very wet and soft.

Accordingly, based on the above-described conditions, a specific experiment on each of the conditions was performed.

### Example 4: Sensory evaluation on water content of cooked rice (said example is not part of the invention)

In order to determine the optimum process conditions for preparation of cooked rice as described in Example 1, sensory evaluation on the water content of cooked rice was performed. The water content of cooked rice was set at 57 wt%, 63 wt% and 69 wt%. Sensory evaluation was performed for appearance, adhesiveness, adhesiveness preference, texture, texture preference and overall taste, and the results of the evaluation were rated on a five-point scale. The results of the evaluation are shown in Table 1 below.

**Table 1**

| Water content | Appearance | adhesiv eness | adhesive ness preferen ce | Texture | Texture preferen ce | Overall taste |
|---|---|---|---|---|---|---|
| 63 wt% | 3.6 | 3.9 | 3.9 | 3.7 | 3.9 | 4.0 |
| 57wt% | 3.5 | 3.4 | 3.4 | 3.7 | 3.5 | 3.4 |
| 69 wt% | 3.7 | 3.1 | 3.3 | 2.6 | 3.0 | 3.2 |
| 5: very good. 4: good. 3: moderate. 2: poor. 1: very poor. | | | | | | |

As can be seen from the results of sensory evaluation shown in Table 1 above, water content of 63 wt% showed a significant difference from water content of 57 wt% and 69 wt% with respect to adhesiveness preference and texture pressure and showed a high overall taste score of 4.0.

### Example 5: Sensory evaluation on rice soaking time (said example is not part of the invention)

For the cooked rice prepared in Example 1, an experiment was performed in order to the optimum rice soaking time. The rice soaking times were set at 30 min, 80 min and 100 min. Sensory evaluation was performed according to the method described in Example 4, and the results of the evaluation are shown in Table 2 below.

**Table 2**

| Rice soaking time | Appearance | Adhesivenes | Adhesivenes preference | Texture | Texture preferen ce | Overall taste |
|---|---|---|---|---|---|---|
| 80 min | 3.7 | 3.8 | 3.8 | 3.7 | 3.7 | 3.9 |
| 30 min | 3.6 | 3.7 | 3.8 | 3.8 | 3.8 | 3.7 |
| 100 min | 3.6 | 3.6 | 3.7 | 3.5 | 3.5 | 3.5 |
| 5: very good. 4: good. 3: moderate. 2: poor. 1: very poor. | | | | | | |

As can be seen from the results of sensory evaluation shown in Table 2 above, the whole items and the overall taste (3.9) were better in the case of the rice soaking time of 80 min than in the case of other soaking times.

### Example 6: Sensory evaluation on heat-sterilization conditions of cooked rice (said example is not part of the invention)

For the cooked rice prepared in Example 1, an experiment was performed in order to optimize heat-sterilization conditions. The heat-sterilization times were set at 6.0 sec and 9.0 sec. The heat-sterilization time was 130∼150 °C. Sensory evaluation was performed according to the method described in Example 4, and the results of the evaluation are shown in Table 3 below.

**Table 3**

| Heat-sterilization time | Appearance | Adhesiveness | Adhesiveness preference | Texture | Texture preference | Overall taste |
|---|---|---|---|---|---|---|
| 6.0sec | 3.8 | 3.8 | 3.7 | 3.7 | 3.7 | 3.9 |
| 9.0sec | 3.8 | 3.7 | 3.6 | 3.5 | 3.5 | 3.7 |
| 5: very good. 4: good. 3: moderate. 2: poor. 1: very poor. | | | | | | |

As can be seen from the results of sensory evaluation shown in Table 3 above, the adhesiveness and the texture were better in the case of the sterilization time of 6.0 sec than in the case of the sterilization time of 9.0 sec. Particularly, the overall taste of the cooked rice was better in the case of 6.0 sec (3.9).

### Example 7: Evaluation of dietary fiber content of prepared cooked (said example is not part of the invention)

In order to examine whether the functional material indigestible maltodextrin contained in the cooked rice prepared in Example 1 is contained in the final product in a suitable amount even after the sterilization process performed at high temperature and high pressure, analysis was performed according to the dietary fiber analysis method (second method, section 4.3-26) described in the Health Functional Food Code.

The results of the analysis indicated that the content of water-soluble dietary fiber in the final product was 2.0-3.1 wt%, which satisfies the content of the Health Functional Food Code that indicates that the content of dietary fiber in final products should be 80% or higher of the standard value (5.3 g).

### Example 8: Evaluation of functionality by human experiment (said example is not part of the invention)

In order to prove the functional effects of the cooked rice prepared under the conditions described in Example 1, a human experiment on the effect of inhibiting postprandial blood glucose elevation was performed.

Specifically, indigestible maltodextrin-containing cooked rice and conventional cooked rice were randomly provided to 53 persons with impaired fasting glucose, impaired glucose tolerance and early-stage diabetes, and the persons were allowed to take the rice products once a day for 4 week. At 0 week and 4 weeks after intake, the blood glucose levels at 0 min, 30 min, 60 min and 120 min were measured and comparatively analyzed by paired t-test. The results of the measurement are shown in FIG. 4. In FIG. 4, † versus the change in the placebo group indicates p<0.05, and ‡ indicates p<0.001.

As can be seen from the human experiment results shown in FIG. 4, the test group fed with the indigestible maltodextrin-containing cooked rice for 4 weeks showed significant decreases in blood glucose levels and blood glucose response areas (AUC) at 30 min, 60 min and 120 min, whereas the group fed with the conventional cooked rice showed no significant change.

### Example 9: Optimization of retort process

For the purpose of global export, a product in the form of retort-packaged cooked rice, not in the form of aseptic-packaged cooked rice, was developed in the present invention. The retort used in this Example was a rotary retort, and the retort process was performed under the conditions shown in Table 4 below.

**Table 4**

| | Conditions | |
|---|---|---|
| | Temperature (°C) | Time (min) |
| First sterilization | 100∼110 | 3-5 |
| Second sterilization | 120∼130 | 5-15 |

Generally, the preparation of retort-packaged cooked rice is performed under strong sterilization conditions, including high temperature and pressure conditions, compared to the preparation of aseptic-packaged rice. For this reason, it is important to determine the optimum temperature and pressure conditions in which the taste quality of retort-packaged cooked rice is maintained at the same level as that of aseptic-packaged cooked rice. Based on the results of experiments performed several times, the temperature and time conditions as described in the above table could be determined.

### Example 10: Evaluation of quality of retort-packaged cooked rice

For comparison of taste quality between the retort-packaged cooked rice prepared under the conditions of Example 9 and aseptic-packaged cooked rice, sensory evaluation of the cooked rice products was performed. The results of the evaluation are shown in Table 5 below.

**Table 5**

| | Appearan ce | Adhesive ness | Adhesiv eness prefere nce | Texture | Texture prefere nce | Overall taste |
|---|---|---|---|---|---|---|
| Retort-packaged cooked rice | 3.5 | 3.9 | 3.7 | 3.7 | 3.8 | 3.7 |
| Aseptic-packaged cooked rice | 3.7 | 3.7 | 3.8 | 3.8 | 3.8 | 3.8 |

As can be seen in Table 5 above, the overall taste of the retort-packaged cooked rice was equal to that of the aseptic-packaged cooked rice.

In addition, in order to examine quality by instrumental measurement, the taste of the cooked rice was measured. The results of the measurement are shown in Table 6 below.

**Table 6**

| | Appearance | Hardness | Adhesive ness | Balance | Taste value |
|---|---|---|---|---|---|
| Retort-packaged cooked rice | 5.8 | 8.1 | 5.4 | 4.5 | 58 |
| Aseptic-packaged cooked rice | 5.65 | 7.9 | 5.0 | 4.5 | 58 |

As can be seen in Table 6 above, the taste value of the retort-packaged cooked rice was similar to that of the aseptic-packaged cooked rice, and these results were similar to those of the sensory evaluation.

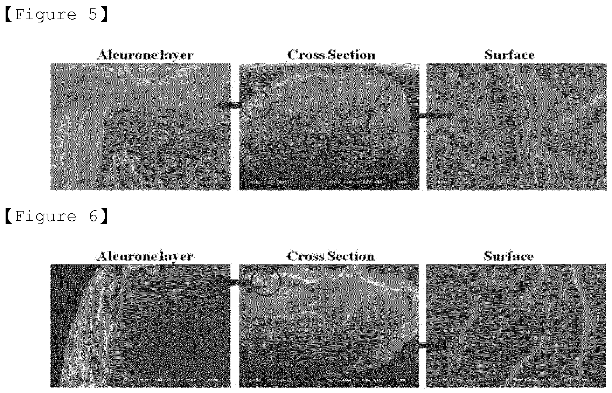

In addition, the cross-sectional shapes of grains of the retort-packaged cooked rice and the aseptic-packaged cooked rice were observed, and the results of the observation are shown in FIGS. 5 and 6, respectively.

As can be seen in FIGS. 5 and 6, the quality of grains of the retort-packaged cooked rice was equal to that of the aseptic-packaged cooked rice.

## Claims

1. A method for preparing retort-packaged cooked rice for inhibiting blood glucose elevation, the method comprising the steps of:
1) washing raw rice, soaking the washed rice in water, dehydrating the soaked rice, and filling the dehydrated rice into a container;
2) heat-sterilizing the rice filled into the container;
3) supplying cooking water, which contains indigestible maltodextrin in an amount of 5.0-8.0 g based on 210 g of the cooked rice, into the rice-filled container, and cooking the rice with steam; and
4) sealing the cooked rice; and
5) subjecting the cooked rice to a retort process, wherein the retort process in step 5) is performed by sterilizing the cooked rice at a temperature of 100 to 110 °C for 3-5 minutes, and then sterilizing the cooked rice at a temperature of 120 to 130 °C for 5-15 minutes.

2. The method of claim 1, wherein the raw rice is non-glutinous rice, glutinous rice, white rice, brown rice, black rice, germinated brown rice, glutinous barley, or a mixture of two or more thereof.

3. The method of claim 1, wherein the raw rice in step 1) is soaked for 60-90 minutes.

4. The method of claim 1, wherein the heat-sterilizing in step 2) is performed 4-10 times at a temperature of 130∼150 °C for 5-8 seconds each time.

5. The method of claim 1, wherein the indigestible maltodextrin has a dietary fiber content of 4.0-6.5 g based on 210 g of the cooked rice.

6. The method of claim 1, wherein the cooked rice has a final water-soluble dietary fiber content of 2.0-3.1 wt%.

## Patentansprüche

1. Verfahren zur Herstellung von Retorten-verpacktem gekochtem Reis zur Hemmung der Erhöhung des Blutzuckers, wobei das Verfahren die folgenden Schritte umfasst:
1) Waschen von rohem Reis, Einweichen des gewaschenen Reises in Wasser, Entwässern des eingeweichten Reises und Füllen des entwässerten Reises in einen Behälter;
2) Sterilisieren des in den Behälter gefüllten Reises mit Hitze;
3) Zuführen von kochendem Wasser, das unverdauliches Maltodextrin in einer Menge von 5,0 - 8,0 g, bezogen auf 210 g des gekochten Reises, enthält, in den mit Reis gefüllten Behälter und Kochen des Reises mit Dampf; und
4) Abdichten des gekochten Reises; und
5) Retortenverfahren mit dem gekochten Reis,
wobei das Retortenverfahren in Schritt 5) durch Sterilisieren des gekochten Reises bei einer Temperatur von 100 bis 110 °C für 3-5 Minuten durchgeführt wird und der gekochte Reis dann bei einer Temperatur von 120 bis 130 °C für 5-15 Minuten sterilisiert wird.

2. Verfahren nach Anspruch 1, **dadurch gekennzeichnet, dass** der rohe Reis nicht-klebriger Reis, klebriger Reis, weißer Reis, brauner Reis, schwarzer Reis, gekeimter brauner Reis, klebrige Gerste oder ein Gemisch aus zwei oder mehreren davon ist.

3. Verfahren nach Anspruch 1, **dadurch gekennzeichnet, dass** der rohe Reis in Schritt 1) für 60-90 Minuten eingeweicht wird.

4. Verfahren nach Anspruch 1, **dadurch gekennzeichnet, dass** das Sterilisieren mit Hitze in Schritt 2) 4-10 mal bei einer Temperatur von 130 ∼ 150 °C für jeweils 5-8 Sekunden durchgeführt wird.

5. Verfahren nach Anspruch 1, **dadurch gekennzeichnet, dass** das unverdauliche Maltodextrin einen Ballaststoffgehalt von 4,0 - 6,5 g, bezogen auf 210 g des gekochten Reises, aufweist.

6. Verfahren nach Anspruch 1, **dadurch gekennzeichnet, dass** der gekochte Reis einen endgültigen wasserlöslichen Ballaststoffgehalt von 2,0 - 3,1 Gew.-% aufweist.

## Revendications

1. Méthode de préparation de riz cuit à emballage autoclave destiné à l'inhibition de l'élévation de la glycémie, la méthode comprenant les étapes consistant à :
1) laver du riz brut, tremper le riz lavé dans de l'eau, déshydrater le riz trempé, et charger le riz déshydraté dans un conteneur ;
2) stériliser thermiquement le riz chargé dans le conteneur ;
3) fournir de l'eau de cuisson, qui contient des maltodextrines indigestibles selon une quantité de 5,0-8,0 g sur la base de 210 g de riz cuit, dans le conteneur chargé de riz, et cuire le riz par de la vapeur ; et
4) sceller le riz cuit ; et
5) soumettre le riz cuit à un procédé d'autoclave,
où le procédé d'autoclave dans l'étape 5) est mis en oeuvre par la stérilisation du riz cuit à une température allant de 100 à 110°C pendant 3-5 minutes, puis la stérilisation du riz cuit à une température allant de 120 à 130°C pendant 5-15 minutes.

2. Méthode selon la revendication 1, dans laquelle le riz brut est du riz non glutineux, du riz glutineux, du riz blanc, du riz brun, du riz noir, de riz brun germé, de l'orge glutineux, ou un mélange de deux, ou plus, parmi ceux-ci.

3. Méthode selon la revendication 1, dans laquelle le riz brut dans l'étape 1) est trempé pendant 60-90 minutes.

4. Méthode selon la revendication 1, dans laquelle la stérilisation thermique dans l'étape 2) est mise en oeuvre 4-10 fois à une température de 130-150°C pendant 5-8 secondes chaque fois.

5. Méthode selon la revendication 1, dans laquelle les maltodextrines indigestibles possèdent une teneur en fibres alimentaires de 4,0-6,5 g sur la base de 210 g de riz cuit.

6. Méthode selon la revendication 1, dans laquelle le riz cuit possède une teneur finale en fibres alimentaires hydrosolubles de 2,0-3,1% en poids.
